# EUROPEAN PATENT SPECIFICATION

(11) **EP 3 789 344 B1**
(45) Date of publication and mention of the grant of the patent: **10.11.2021**
(21) Application number: 20187368.4
(22) Date of filing: 23.07.2020
(51) Int. Cl.: C01B 3/40, B01J 23/38, B01J 23/656, B01J 23/68, B01J 23/889, B01J 23/96

(54) **MODULABLE SYSTEM FOR THE GENERATION OF ENDOGAS WITH CARBON MONOXIDE CONTENT THAT CAN BE SET**
MODULIERBARES SYSTEM ZUR ERZEUGUNG VON ENDOGAS MIT EINSTELLBAREM KOHLENMONOXIDGEHALT
SYSTÈME MODULABLE POUR LA GÉNÉRATION D'ENDOGAZ AVEC UNE TENEUR EN MONOXYDE DE CARBONE RÉGLABLE

(30) Priority: 05.09.2019 IT 201900015683
(43) Date of publication of application: 10.03.2021
(73) Proprietor: NIPPON GASES INDUSTRIAL S.R.L., 20159 Milano (IT)
(72) Inventor: RINALDI, Giulio, 20159 Milano (IT); VAIANI, Ivan, 20159 Milano (IT); BONOMOLO, Emanuele, 20159 Milano (IT)
(74) Representative: Petruzziello, Aldo

(56) References cited:
- EP-A1- 2 851 339
- US-A1- 2007 293 713
- US-B1- 6 191 332

## Description

The present invention relates to a modulable plant for the production of controlled atmosphere of endogas (i.e. endothermic gas), with a percentage of carbon monoxide (CO) and/or hydrogen (H₂) that can be set by the user, for feeding a plurality of furnaces for heat treatment of metals and their alloys.

More particularly, the present invention relates to such a plant capable of producing endogas using a catalyst with a base of noble metal oxides and a binary mixture with a base of air and methane (or another hydrocarbon), said endogas produced having a constant volumetric composition also at feed rates reduced up to 90% with respect to the nominal flow rate of said plant.

Even more particularly, the present invention relates to a plant as defined above in which the percentage of carbon monoxide (CO) and/or hydrogen (H₂) contained in the endogas can be set by the user according to requirements.

In fact, said modulable plant can produce endogas at percentages of CO or H₂ that are even increased with respect to the endogas generators known in the art, when the feed to the catalytic reactor is a ternary mixture based on air, methane and carbon dioxide (CO₂).

In addition, through the use of a binary mixture of CO₂ and nitrogen (N₂), this modulable system can perform the regeneration of the catalyst of the reaction retorts that are not in function during normal operation of the plant, for example when there is a lower demand for endogas flow to be produced.

Endogas (or endothermic gas) is a gas mixture, also called "endothermic mixture" or "controlled atmosphere", rich in CO, H₂ and N₂, as well as containing to a lesser extent H₂O and CO₂, which is used both as a protective atmosphere in heat and/or surface treatments of metals (with respect to oxidation), and as a mixture able to confer certain mechanical properties to the metal undergoing treatment, for example in the surface carburization of steel parts intended for mechanical members that must combine fatigue resistance with surface hardness and wear resistance.

The endogas is the result of an endothermic reaction of incomplete combustion between air and methane (or another hydrocarbon), conducted in the absence of oxygen and in the absence of water/steam, to form reducing substances such as CO to the detriment of CO₂ (reaction also indicated as COPx) according to the following reaction (in the case of use of methane):

CH₄ + ½O₂ + 1.89N₂ → CO + 2H₂ + 1.89N₂

and typically has the following optimal volumetric composition (always in the case of use of methane):

N₂=35-40% H₂=40-45% CO=20-22.5% CO₂=0.2-0.5%

where a final CH4 content preferably less than 0.5% by volume is an indicator of maximum conversion and of the substantial completion of the reaction.

The above optimal composition is currently the result of a reaction conducted using specific nickel-based catalysts (i.e. nickel hexahydrate oxides, on an alumina substrate), with molar ratios between air and natural gas comprised between 2.25/1 and 2.75/1, and at a temperature comprised between 1000 and 1100°C, generally around 1050°C.

Said endogas is produced in special and appropriate plants called "endogas generators", formed by a heating chamber that supplies heat to a catalytic reactor, placed inside it. Said reactor is formed by one or two cylindrical "retorts", in the form of a simple tube or U-tube, containing the catalyst, followed by a heat exchanger, usually gas/water, to rapidly cool the reaction products so as to avoid that the reaction proceeds further forming CO₂ in high quantities to the detriment of CO. From said exchanger the endogas exits at a temperature generally lower than 150°C, preferably lower than 100°C.

Temperatures lower than 100°C are preferable in order to avoid the insulation/protection of the tubes affected by the flow but have no influence on the composition of the mixture produced.

Important for the purpose of sizing of the abovementioned generator is the spatial speed of the catalyst used, which defines the quantity of gas that passes per unit of time (Nm³/h) in relation to the catalyst volume (litres), and is inversely proportional to the dwell time of the gas in the catalyst. This parameter allows calculation of the catalyst volume necessary to have the maximum conversion efficiency at the working temperature of the catalyst on which the obtaining of the abovementioned optimal composition depends.

The activity of nickel-based catalysts is not very high, in particular the selectivity towards H₂ and CO is below 100% and the spatial speed (defined as the quantity of endogas produced with optimal composition in the unit of time by the catalyst volume unit) is less than 4000 h-1, i.e. less than 4 Nm³/h of endogas produced per litre of catalyst. Said catalyst is presented in the form of balls and/or cubes with an approximate diameter of 18 mm and a side of 18-25 mm, normally with a diameter or side that does not exceed 40 mm in order to reduce pressure drops and have a sufficient active surface.

Once the catalyst volume required to produce a certain hourly quantity of endogas has been defined, the diameter of the reactor (retort) is sized accordingly. This diameter is generally larger than 100 mm in current endogas generators, which adopt one or two reaction "retorts", to limit the height development of the combustion chamber and provide a sufficient catalytic bed (catalyst volume).

Endogas generators with three retorts are also commercially available, but the diameter of each tube is in any case greater than 100 mm, again in order to limit the height dimensions of the heating chamber and of the head of the catalytic bed which, if excessive, would lead to counter-pressures that would also prevent the flow of reaction gases in the expected flow rates.

The disadvantage of this type of endogas generators lies in the scarce modulability of the flow rate when the production is to be reduced considerably with respect to the nominal one of sizing of the plant. In fact, if the nominal capacity (nominal produced flow rate) is to be reduced by decreasing the feed flow, there is a risk of having a flow that does not come into complete contact with the catalyst since the mass of gas loses force of penetration in the catalyst (lower speed in the retort).

In this way the catalytic power of the retort is not fully exploited so that the optimal endogas composition is not achieved.

In addition, as the reaction is endothermic, an excessive reduction in flow rate in the retort potentially exposes the catalyst to the risk of localised over-temperatures, resulting in premature damage.

In some known plants with one retort, the flow rate is reduced without altering the optimal composition of the endogas by providing two by-pass lines, one on the air/methane mixture feed and the other on the endogas produced.

However, this type of system provides for the decrease in the flow rate by a maximum of 30% because further decreases excessively modify the speed and composition, resulting in a plant that is not very modulable in terms of productivity.

A further reduction in flow rate, for example around 50%, is achieved by some known plants, with one or two retorts, using a variable speed pump or making one retort work instead of two. However, reductions below 50% of the nominal flow rate are not currently envisaged without affecting the composition.

Since the composition of the endogas affects the performances of metallurgical treatments, it is important to maintain the abovementioned optimal composition throughout the production of the same, even for flow rates much lower than the nominal one of the plant.

In order to try to overcome this problem, a modulable system has been provided in the art formed by several generators mounted in parallel, each with its own retort and appropriate feed system, where a centralised automatic control system manages the activation, deactivation or partialization of the pumps in such a way that at the demand for a high flow rate several generators are activated, while at the demand for a lower flow rate several generators are deactivated and/or the pump speed of one or more generators is reduced to cover the widest possible range of flow rates.

However, this modular system of generators is very expensive and complex to manage.

Furthermore, in this type of generators of the prior art, with one or two retorts, when the level of fouling of the catalyst (sooting) is high, it is necessary to stop the plant to replace the retort or work at half the nominal capacity (in the case of two retorts) falling back into the problems of composition expressed above.

Patent application GB 2 222 096 describes a combined system of steam reforming and partial oxidation which foresees a plurality of tubes in the form of a tube bundle, containing a suitable catalyst, where said tubes are fed by a single flow in input to said tube bundle having a pressure higher than 50 barG, without the possibility of individually excluding one or more tubes forming the tube bundle.

Patent application EP 2851339 A1 in the name of the Applicant describes an endogas generator that can be modulated in the flow rate produced and fed with a binary mixture of air + methane, which allows an always constant composition to be obtained, even at low flow rates. The CO content reaches 20-22.5% (volumetric composition) and the H₂ content reaches 40-45% (volumetric composition).

Publication EP 2 851 339 A1 makes known a system for the generation of endogas, in which all catalytic tubes are fed with an air/methane mixture for the formation of endogas with a CO content of 20-22.5%.

However, some specific treatments of metals and their alloys, such as for example surface carburization (or cementation) and carbo-nitriding (cementation with added ammonia) can be more effectively conducted using "enriched" controlled atmospheres i.e. with a higher concentration in volume of CO and H₂, for example having a percentage of CO increased up to 26% in volume and up to 52% in volume in the case of H₂.

Said types of atmospheres "enriched" in CO and H₂ cannot be produced in known endogas generators because in the reaction

CH₄ + ½O₂ + 1.89N₂ → CO + 2H₂ + 1.89N₂

the percentages of CO and H₂ cannot be freely increased due to the fact that the available oxygen, coming from the air, is in constant ratio with the nitrogen which therefore acts as diluent.

Therefore, said types of enriched atmosphere are currently produced directly in the hot chamber of the furnaces from nitrogen and methanol, without the use of any endogas generator. In practice, a mixture of methyl alcohol (pure or denatured) diluted with nitrogen is fed into the hot chamber of the furnace for the treatment of metals so as to cause the pyrolysis of the methanol which allows a volumetric composition to be had of more than 20% CO, maintaining an H₂/CO volumetric ratio indicatively equal to 2 (two).

However, the pyrolysis of the methyl alcohol directly in the furnace, it also being endothermic, can create temperature unevenness in the treatment chamber, with consequent problems in the control of the production cycle.

Vice versa, the endogas or the endogas with increased percentages of carbon monoxide (CO) and/or hydrogen (H₂), being produced externally to the furnace, does not lead to this kind of problem.

It should be noted that known endogas generators preferably use methane and not other more branched hydrocarbons (ethane, propane, etc.) in that the ratio between the H and C atoms of said gaseous hydrocarbons would result in an endogas with an H₂/CO volumetric ratio lower than 1.6. This is disadvantageous in that a reduced H₂ concentration due to the reduced H₂/CO ratio would nullify any increase in CO, since H₂ is a promoter of cementation.

Therefore it would be desirable to produce directly in an endogas generator an atmosphere "enriched" in CO and H₂ with a H₂/CO volumetric ratio approximately equal to 2 (two) and in any case higher than 1.6, also using hydrocarbons that are more branched with respect to methane (ethane, propane, etc.).

Moreover, it is always desirable to have an endogas generator available where, in the case of catalyst fouling, it is possible to proceed with its regeneration even during the operation of the generator in order to reduce plant downtimes and guarantee an endogas production with optimal composition, even if at reduced flow rate.

The object of the present invention is to overcome, at least in part, the disadvantages of the prior art by providing an endogas generator capable of modulating in an improved manner the flow rate of endogas produced, ensuring at the same time the optimal composition of the endogas at any flow rate produced, also in the case wherein it is much lower than the nominal flow rate of the generator (flow rate of endogas produced).

A further object of the present invention is to be able to produce endogas having the percentage of CO increased up to 26% in volume and up to 52% in volume in the case of H₂, maintaining at the same time an H₂/CO volumetric ratio indicatively equal to 2 and in any case higher than 1.6.

A further object is to provide such a generator that is inexpensive, easy to manage and which, in the case of catalyst fouling, can be regenerated, also partially, during operation without negatively affecting the optimal composition of endogas due to the decrease in flow rate.

These and other objects are achieved by the endogas generator and with the process in accordance with the invention having the features listed in the appended independent claims 1 and 12, respectively.

Advantageous embodiments of the invention are disclosed by the dependent claims.

A subject of the present invention relates to a plant with an endogas generator to produce a flow Q of an endothermic gas mixture (endogas), optionally containing high percentages of CO higher than 20% (by volume) also up to 26%, starting from a reaction gas mixture comprising air + methane (or another hydrocarbon, e.g. ethane, propane, etc.). Said flow Q of endogas is intended to be used for feeding one or more furnaces for heat treatment of metals and their alloys.

Here below any reference to methane alone is also to be understood to be applicable to natural gas or to hydrocarbon mixtures containing mainly methane.

Natural gas here is understood to mean in particular a gaseous mixture produced by the anaerobic decomposition of organic material, composed mainly of methane (typically >90% volume), also containing heavier gaseous hydrocarbons such as ethane (typically <5% volume), propane (typically <2% volume) and others more branched in smaller percentages. In said mixture known as natural gas small percentages of gases other than hydrocarbons are always present, for example carbon dioxide (CO₂), nitrogen, oxygen (in traces), noble gases and hydrogen sulphide (H2S).

Advantageously the present endogas generator is suitable for the production of approximately 100 Nm³/h but can be dimensioned for a production comprised between 50-200 Nm³/h.

The present endogas generator comprises a catalytic reactor which is contained in the interior of a heated chamber and is composed of at least three catalytic tubes placed in parallel in the form of a tube bundle, where each of said catalytic tubes contains, at least in one tube section, a catalyst based on noble metal oxides by partial oxidation of an air-methane (or other hydrocarbon) or air-methane-carbon dioxide (or other hydrocarbon) mixture.

The heated chamber is a chamber for the heating of the reactor in that placed externally around it and which supplies heat to the catalytic reactor by means of burners.

The catalyst used in the catalytic tubes is a catalyst for partial oxidation of air-methane (or another hydrocarbon) or air-methane-carbon dioxide (or another hydrocarbon) mixtures, and is based on noble metal oxides with a spatial speed greater than 4000 h-1.

The inner diameter of each of said catalytic tubes is less than 100.0 mm and can be advantageously comprised between 50.0 and 99.9 mm.

Each catalytic tube is then in fluid communication with a respective feed tube, external to said heated chamber, and is provided for the purpose of feeding each catalytic tube with a respective flow Qi (volume flow rate), which is the optimum feed flow rate for having a speed on the catalyst such as to make it as efficient as possible.

Each feed tube is then equipped with respective selectable means of regulation which are designed to exclude, if required, the respective feed flow Qi so as to be able to reduce the overall feed flow Qi to the catalytic tubes and thus the volume flow rate Q of endogas leaving the reactor, with respect to a pre-set nominal overall flow rate (Qn) of endogas corresponding to the functioning of all the catalytic tubes.

The abovementioned selectable means of regulation can be advantageously a shut-off valve, preferably three-way, in particular of the automatic type.

Said endogas generator also comprises at least one gas/air exchanger for cooling of the endogas leaving said catalytic reactor.

The cooling of the endogas produced that comes out of the catalytic tubes is advantageously rapid cooling, and preferably such as to quickly bring the temperature of the endogas below 100°C in order to avoid that the reaction proceeds further forming CO₂ in high quantities.

In particular, said gas/air exchanger provides at least one cooling tube in fluid communication with at least one of said catalytic tubes, preferably with all the at least three catalytic tubes, even if in general, even more advantageously, a plurality of cooling tubes are provided in a number generally equal to the number of catalytic tubes, where each cooling tube is in fluid communication only with a respective catalytic tube.

It is also possible to provide a number of gas/air exchangers equal to or greater than three, and more preferably in a number equal to the number of catalytic tubes provided in the catalytic reactor, each exchanger having a number of cooling tubes greater than or equal to 1.

The peculiarity of the endogas generator according to the invention is to provide an automated mixing and control system, upstream of the catalytic reactor, which comprises at least two mixing units which are independent one of the other, while controlling both selectable means of regulation. In this way it is possible to regulate/control independently
- the feed to one or more of said catalytic tubes of one or more reaction flows composed of air + methane, optionally added with CO₂;
- and the feed of any regeneration flows composed of regeneration CO₂+N₂ (but also only washing/flushing N₂).

In this way it is possible to obtain a generator that can be modulated in the flow of endogas produced and in the relative CO content (% by volume), as well as in the number of catalytic tubes in regeneration. Said parameters can be modulated at the same time.

In this way it is possible to avoid stopping the generator for the regeneration or washing of the catalyst in that this may take place on some catalytic tubes during the operation of the remaining tubes, producing endogas in a smaller quantity but always with optimal composition, possibly also enriched in CO.

In fact, by partially regulating the generator with the deactivation of at least one retort, it is possible to restore the optimal conditions of the deactivated retort(s) during production at the same time ensuring the production of endogas with optimal composition on the remaining retort(s).

In addition, CO-enriched endogas can be produced in the same generator.

In particular, the mixing system in the present endogas generator is designed to produce, fed to said catalytic reactor, mixtures of
(A) air + reaction methane;
   or
(B) air + methane + CO₂ for the enrichment reaction;
   and/or
(C) CO₂+N₂ for regeneration (but also only washing/flushing N₂) of the catalyst.

In said generator the selectable means of regulation, e.g. the shut-off valves, have therefore the function of individually excluding one or more of the tubes for feeding to the catalytic tubes so as to obtain an overall feed flow Q that is lower with respect to said nominal flow Qn of the generator, said overall flow Q being, in practice, the sum of the single flows Qi in input to each feed tube of each catalytic tube, Qi being possibly a binary air+methane mixture, a ternary air+methane+CO₂ mixture, nitrogen only or binary nitrogen+CO₂ mixture.

"Endogas" here is understood to mean a gas mixture, also called "endothermic mixture" or more generically "controlled atmosphere", which is the result of an incomplete combustion endothermic reaction between air and methane (or another hydrocarbon), in the absence of oxygen and in the absence of water/steam, to form in high percentages reducing substances such as CO instead of CO₂.

Said gas or endogas mixture typically has the following optimal volumetric composition in the case of use of methane:
N₂=35-40%, H₂=40-45%, CO=20-22.5%, CO₂=0.2-0.5%, with CH₄ ≤ 0.5% approximately.

Said mixture, which does not contain water/steam among the initial and final components, must not be identified with similar mixtures containing water/steam and deriving from steam reforming processes.

The peculiarity of the present system with respect to known ones for the production of endogas lies therefore in the fact that each catalytic tube has a respective selectable feed tube and preferably also a respective cooling tube so as to define a separate endogas generator, which is independent from the functioning of the other catalytic tubes mounted in parallel and contained in the present system. Thanks to the selectable valves, it is possible to feed or not each catalytic tube, while keeping it in the operating position inside the heating chamber, i.e. not removing it from the plant, thus adjusting the number of catalytic tubes in operation as a function of the required endogas flow rate in output.

In this way, even when the generator is fed with an overall flow rate lower than that required to obtain a nominal endogas flow rate, it is possible to have the same optimal flow rate in each catalytic tube obtained at the nominal flow rate Qn.

At the same time said shut-off valves, typically of the three-way type, allow washing N₂ to be supplied, optionally with CO₂ in case of regeneration of the catalyst, to the catalytic tubes excluded from the production of the overall flow of endogas Q.

Additional three-way valves, located at the outlet of the heat exchanger, allow the placing in fluid communication, with the user endogas distribution line, only the catalytic reactors/exchangers in endogas production.

Vice versa, the catalytic reactors/exchangers in washing with N₂ or in regeneration (with N₂+CO₂ mixture), via the same valves, are switched on a direct torch line.

In summary, the generator is composed of a plurality of catalytic tubes, arranged in the form of a tube bundle and inserted in the heating chamber where each catalytic tube constitutes an element independent from the other catalytic tubes.

Each catalytic tube is in fact combined with a corresponding gas/air heat exchanger module, composed of one or more cooling tubes. Therefore, using the same heating chamber, the same fan and the same cooling air supply duct (in which the cooling tubes are contained), a series of endogas generation sub-modules, each one composed of a catalytic tube and cooling tube(s), are made.

Each module, if inserted via the shut-off valves, contributes to the achievement of the nominal overall flow rate Qn of endogas.

The present generator, using methane as reaction hydrocarbon and adding CO₂, allows the production of endogas with the percentage of CO increased up to 26% in volume and up to 52% in the case of H₂, maintaining at the same time a volumetric H₂/CO ratio indicatively equal to 2 (two) and in any case above 1.6.

To obtain this result the present invention uses, in association with the endothermic reaction of partial oxidation of the methane previously indicated, the reaction of dry reforming of the methane (which takes place at the same temperatures of partial oxidation) in which a mixture with 50% (by volume) of CO and 50% of H₂ is obtained:

CH₄ + CO₂ → CO + 2H₂

In fact, the Applicant has found that the present catalyst with a base of noble metals is also suitable for catalysing the aforementioned dry reforming reaction.

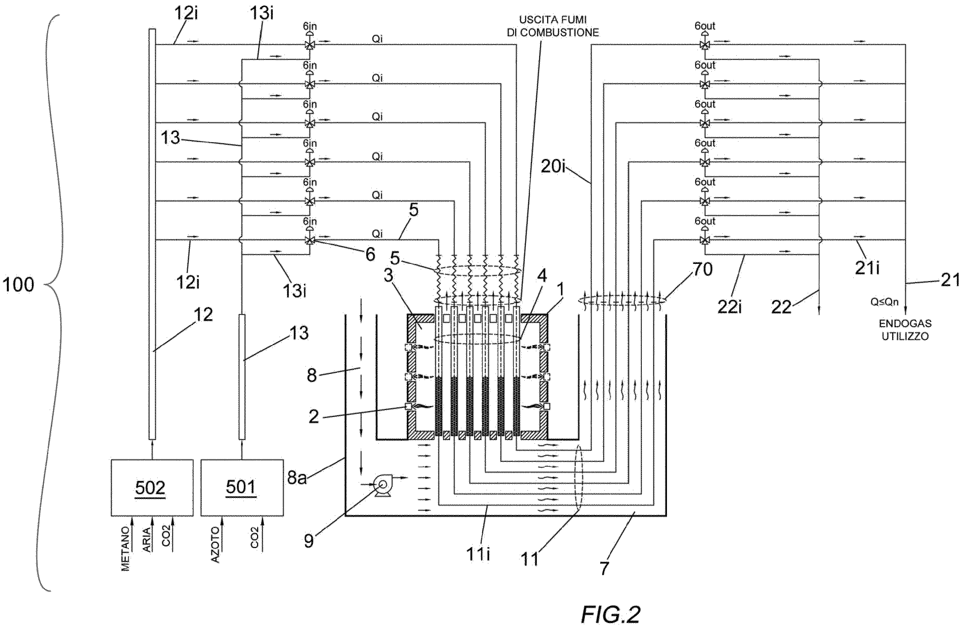

This enrichment result is obtained through a calculation algorithm that manages the flow rates according to this basic logic:
- Setting of set point of endogas flow rate Q in output from the generator (which depends on the endogas demand downstream of the generator);
- Setting of CO percentage set point in the endogas flow rate Q in output from the generator;
- Setting of set points of minimum and maximum air/methane volume ratios usable by the plant (operating range enabled). The air/methane volume ratios, minimum and maximum, usable in the present endogas generator with a size as defined above (200 Nm³/h endogas max) are for example comprised between 2.25/1 and 2.975/1.
- Setting of the set point of initial value of the air/methane volume ratio.
- Setting of set point of value of mVolts O₂ (used with plant with automatic ratio adjustment). The measuring device is placed at the exit of the system (line 21 in Fig. 2) and allows the choosing of the air/methane ratio suitable for having the desired percentage of residual CO₂ in the endogas produced.
- Calculation of the flow rates of methane, air and CO₂ necessary to obtain the desired CO concentration, balancing, in the case of methane use, the following reactions

   CH₄ + ½O₂ + 1.89N₂ → CO + 2H₂ + 1.89N₂

   and

   CH₄ + CO₂ → 2CO + 2H₂

   in the case of an enrichment reaction in CO.
- Measurement of the value of mVolt O₂ by means of a Lambda probe (oxygen probe) or of the percentage value of CO₂ and residual CH₄ by means of an infrared analyser: the sampling point is preferably placed in output from the plant (on line 21 in Fig. 2).
- Reduction in the air/methane volumetric ratio and consequent recalculation of the flow rates of methane, air and CO₂ should the mVolts O₂ be lower than the set point (automatic setting) or should an instrument external to the generator, such as for example an infrared analyser (manual setting), detect a percentage of CO₂ higher than desired;
   or
- Increase in the air/methane volumetric ratio and consequent recalculation of the flow rates of methane, air and CO₂ should the mVolts O₂ be higher than the set point (automatic setting) or should an instrument external to the generator, such as for example an infrared analyser (manual setting), detect a percentage of CO₂ lower than desired.
- Repetition of the cycle of calculation and regulation (regulation in feedback).

A further peculiarity of the present endogas plant with respect to known endogas production ones consists in the fact that through the use of CO₂ and nitrogen (N₂) it can also carry out the regeneration or washing of the catalyst on reaction retorts not fed with binary mixture (A) (air + methane) or ternary mixture (B) (air + methane + CO₂) during normal operation of the plant.

More particularly, with the generator of the invention, the production of an endogas flow Q is carried out, in which one or more of said catalytic tubes is fed, independently one from the other:
- with a flow of a mixture of air and methane, optionally with the addition of CO₂, for the production of said endogas; or
- with a flow of a mixture of CO₂ and N₂ for the regeneration of said catalytic tubes or with a washing flow with N₂ of the same catalytic tubes,
so as to allow the production of endogas to be continued on one or more catalytic tubes of the generator of the invention, also during the phase of regeneration or of washing of the remaining catalytic tubes in a state of out of operation from endogas production.

In this case, the control logic provides for:
- activation or otherwise of the function of regeneration or of washing of the catalyst.
- Verification of the number of retorts not used for endogas production, irrespective of the CO percentage set.
- Activation of one or more CO₂ delivery valves as a function of the number of unused retorts.
- Delivery of the CO₂ in dilution to washing N₂ to the retorts not used for endogas production.
- Repetition of the calculation and regulation cycle (regulation in feedback).

The catalysts used here are those based on oxides of noble metals (platinum, gold, silver, rhodium, iridium, palladium, osmium, ruthenium) provided for the processes of partial catalytic oxidation which have a high catalytic efficiency (conversion around 100%) and are provided with spatial speeds generally higher than 4,000 h-1, preferably equal to or greater than 10,000 h-1, more preferably in the order of at least 15,000 h-1, such as for example those based on rhenium or rhodium, palladium, platinum, or mixtures thereof in quantities generally from 0.1% to 10% by weight, and supported.

An example of these catalysts is represented by a rhenium-based catalyst, in a quantity between 0.1% and 10% by weight, also containing a second noble metal chosen from among platinum, rhodium, iridium, ruthenium and palladium, supported on alumina. The distinctive features of the present generator with respect to known ones are many.

First of all, the use of new catalysts with a greater spatial speed involves the use of a smaller quantity of catalyst with the same amount of endogas produced, thanks to the greater surface activity, thus containing the dimensions of the plant with respect to those known with the same amount of endogas produced; secondly, it is possible to reduce the diameter of the retort without exceeding in height with consequent possible excessive counter-pressures due to the fact that the number of retorts provided is such that a tube bundle of retorts with reduced diameter is formed.

The tubes of the retorts of the present plant having a reduced section, the reaction between methane (or another hydrocarbon) and air occurs homogeneously throughout the horizontal section of the tube since there is no temperature gradient in said section. In fact the Applicant has found that, with tubes having a nominal diameter equal to or less than 100 mm, the temperature gradient between the tube interior and the tube exterior is practically zero and the temperature at the centre of the tube (core) is more aligned with the temperature in proximity of the surface of the tube exposed to the flames of the burner. This necessarily determines a greater uniformity of temperature along the whole catalytic bed allowing the same optimal composition to be obtained both from the reaction that takes place in proximity of the surface of the tube and from the one that takes place in the centre of the tube.

Regardless of whether CO₂ is used or not, the volume ratios between air and methane used here are preferably comprised between 2.25/1 and 2.75/1. In the case of use of natural gas, the molar ratio can be conveniently used between 2.50/1 and 2.975/1. The reaction temperature (also in the case of dry reforming) is comprised between 1000 and 1100°C, generally around 1050°C.

It is to be understood that in the present endogas generator it is possible to replace ambient air with oxygen in a mixture with other gases or with air enriched with oxygen or with pure oxygen, without thereby departing from the object of the present invention.

It should be noted that in each tube the catalyst occupies only one section, preferably the end section, with respect to the length of the catalytic tube contained in the heating chamber, so that the remaining free section constitutes a chamber for pre-heating of the air-methane mixture (or another hydrocarbon). In light of the small diameter of the abovementioned tubes the air-methane mixture (or another hydrocarbon) succeeds in heating up quickly in the free section of each catalytic tube, thus entering the catalytic section advantageously already at the reaction temperature with a clear advantage of yield.

Further features of the invention will be made clearer by the detailed description that follows, referring to an embodiment purely by way of a non-limiting example illustrated in the accompanying drawings, in which:
Figure 1 is a working block diagram;
Figure 2 illustrates, in a partially interrupted section, the endogas generator in relation to the catalytic reactor and cooler with relative tubes;
Figure 3 is a schematic representation from above of the generator of the present invention;
Figure 4 is a vertical section, taken along line IV-IV of the reactor of Figure 3.

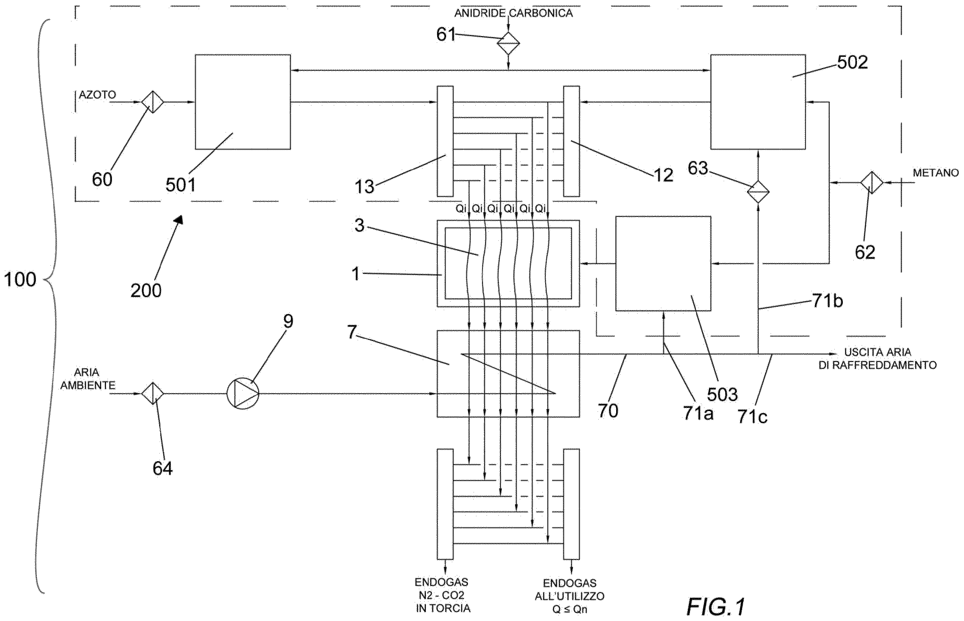

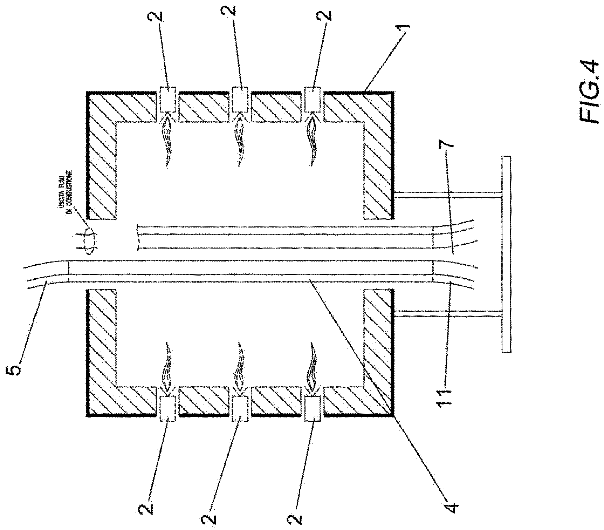

The diagram of Figure 1 shows the cylindrical heating chamber 1, suitably insulated (for example by the use of refractory material or ecological ceramic fibres) inside which a plurality of burners 2 are placed (Figs. 2, 3 and 4).

Said burners 2 preferably heat a second cylindrical chamber 3, which is placed inside chamber 1 and at the central zone of said chamber 1, by direct contact with the flame of each burner placed tangentially with respect to said cylindrical chamber 3.

Inside said cylindrical chamber 3 are housed catalytic tubes 4 (Figs. 2, 3 and 4) as described in detail here below.

The endogas plant 100 according to the invention provides, upstream of the heating chamber 1, a mixing system, illustrated in the dotted box in Fig. 1 and denoted overall by reference numeral 200, which is composed of a series of mixing units independent one from the other as will be described in detail here below.

In particular, a first mixing unit of the mixing system 200 provides a mixing and regulation control unit 501 fed with nitrogen and optionally also with CO₂, so as to produce:
- a mixture of N₂+CO₂ of regeneration having a suitable composition according to the concentration of CO₂ set previously;
   or
- a simple flow of washing N₂.

On the nitrogen piping and on the CO₂ piping, in input to said first control unit 501, there are advantageously provided, respectively, a filter 60 for retaining the possible impurities in the nitrogen flow and a filter 61 for retaining the possible impurities in the CO₂ flow.

Said first control unit 501 then feeds a corresponding manifold 13 from which as many tubes 13i (Fig. 2) as there are tubes 5 (Fig. 2) for feeding the catalytic tubes 4 (Fig. 2) branch off.

Between each tube 13i that branches off from manifold 13 and the corresponding feed tube 5, which are in fluid communication one with the other, a corresponding shut-off valve 6in is mounted (Fig. 2).

Therefore, a respective flow of N₂ or N₂ + CO₂ mixture will pass through each tube 13i according to whether the regeneration (or washing) function of the catalyst is activated or otherwise.

Through said tubes 13i and said feed tubes 5 it is therefore possible to feed said catalytic tubes or retorts 4 independently thanks to the relative shut-off valves 6in, each catalytic tube 4 being fed via the corresponding tube 13i, feed tube 5 and relative shut-off valve 6in.

The second mixing unit provides a second mixing and regulation unit 502 fed with air and methane, and optionally also with CO₂, in the case wherein an endogas enriched with CO is to be obtained.

It is preferable that said air is that in output from a cooler as will be explained in detail here below.

Therefore, according to the percentage of carbon monoxide (CO) and/or hydrogen (H₂) set by the user for the endogas and the flow rate of endogas Q required, it is possible to produce a mixture of:
(A) air + methane (reaction mixture)
   or
(B) air + methane + CO₂ (reaction mixture),
each mixture having an appropriate composition (% by volume).

Said unit 502 then feeds a corresponding manifold 12 from which as many tubes 12i (Fig. 2) as there are tubes 5 for feeding the catalytic tubes 4 branch off.

Also with said tubes 12i it is therefore possible to feed said catalytic tubes or retorts 4, thanks to the fact that they are in fluid communication with the respective feed tubes 5 by means of the corresponding shut-off valves 6in as defined above.

A binary methane-air mixture or a ternary methane-air-CO₂ mixture with different compositions, depending on the percentage(s) of CO and/or hydrogen (H₂) set by the user as a function of the value of mVolt O₂ measured by means of a Lambda probe or oxygen probe, can therefore flow inside the manifold 12.

Therefore, said catalytic tubes or retorts 4 can be fed independently one from the other, each one via the corresponding feed tube 5 which is in fluid communication with the corresponding valve 6in, in turn in fluid communication with the respective tube 12i exiting the manifold 12 (containing air + methane and possibly also CO₂).

Advantageously said valves 6in allow the catalytic tubes 4 to be excluded singly, in order to partialize the total flow of gas without changing significantly the speed of passage of the gas on the catalyst with respect to the nominal gas flow, as will be explained in detail here below.

Therefore, the selectable regulation means 6in, which are advantageously in the form of automatic three-way valves, are fed, alternatively, by said mixing and control unit 501 or by said control and regulation unit 502.

Said mixing/regulation system 200 in accordance with the invention also comprises, preferably, a third mixing and regulation unit 503 (Fig. 1) dedicated to obtaining a binary mixture of air + methane for the combustion of burners 2 as will be described here below.

In this case, the air used is that exiting the exchanger 7 so as to recover the heat from the cooling air and make a saving in fuel methane.

Said control units 501, 502, 503 can be made in different ways, within the reach of the person skilled in the art, in order to achieve the objective of having, in the various flow lines 12i and 13i, mixtures with the desired compositions.

Figure 2 illustrates in greater detail, and in section, the zone of endogas plant related to the catalytic reactor and a cooler 7.

Inside said internal cylindrical chamber 3 is advantageously placed a plurality of catalytic tubes, or retorts 4, which are placed in parallel one in relation to the other and not in fluid communication one with the other. Said retorts 4 are preferably in a number higher than three.

Said inner chamber 3 and said catalytic tubes 4 together constitute the catalytic reactor proper contained inside the heating chamber 1.

Each catalytic tube 4 is fed by a respective feed tube 5 which is in turn fed by a tube coming from manifold 12 or by a tube from manifold 13. On each tube 5 there is then provided a three-way shut-off valve 6in which regulates the influx in said tube 5 of the flow of the tube coming from manifold 12 or of the flow of the tube coming from manifold 13.

In this way it is possible to send to the relevant catalytic reactor a methane-air-CO₂ mixture or methane-air mixture, or N₂-CO₂ or N₂ only, according to the different needs.

Instead of a three-way valve it is possible to provide two two-way valves suitably installed in input to the tube 5 at the relative connections of the two lines 12i and 13i coming from the two manifolds 12 and 13.

The gas produced by each catalytic tube 4 is then cooled by means of at least one gas/air heat exchanger 7 whose construction allows to keep the gas flows in output from catalytic tubes 4 independent one from the other, as will be explained in detail here below.

Said heat exchanger 7 is in the form of a duct, is placed outside the heating chamber 1 and contains in its interior a plurality of cooling tubes 11i, each one in fluid communication exclusively with the relative catalytic tube 4.

Said heat exchanger 7 uses as cooling element air (whose flow is indicated in Fig. 2 by means of arrows), suitably filtered by a filter 64 (Fig. 1) and aspirated by a fan 9 placed in the aspiration duct 8a of the cooling air 8.

Each cooling tube 11i is in turn in fluid communication with a respective endogas output tube 20i on which a respective shut-off valve 6out is mounted.

Each valve 6out is preferably a three-way valve, in turn connected, on one side, to an endogas use tube 21i and on the other side to a safety exhaust tube 22i.

In this way it is possible to send the output flow of each catalytic tube 4
- to a safety exhaust tube 22 or torch (for example provided with a pilot burner or with a piezoelectric device) into which all safety tubes 22i flow;
   or
- to a tube 21 of use of the endogas mixture produced, into which all tubes of use 21i flow.

In another embodiment, said heat exchanger 7 can contain only one cooling tube 11 associated with a respective catalytic tube 4 so that the number of exchangers 7 is equal to the number of catalytic tubes 4 provided in the present system.

It is also possible to group the cooling tubes 11, for example the six tubes shown in Fig. 2, in three gas/air heat exchangers 7 (and therefore in three cooling air aspiration ducts 8), in parallel one in relation to the other, each exchanger 7 being at the service of a pair of reaction tubes 4. This arrangement is particularly advantageous in conditions of running at partial speeds since it is possible to exclude one of the exchangers, improving the energy specifications.

It is also possible to provide for several exchangers 7 to be fed, in parallel, by a flow of cooling air which flows inside a single duct 8.

Each cooling tube 11 can then also be made as a tube bundle to increase the efficiency of the cooling system consisting of the exchanger 7 containing the cooling tubes 11. The function of the tube bundle is not only that of increasing the efficiency of the system by increasing the reaction or exchange surfaces, but to have a generator 100 whose total flow rate Q is the result of a series of independent tube bundles, each of which provides its own contribution for the achievement of the total flow rate.

The cooling air in output from the exchanger 7 flows into a tube 70 from which three lines 71a, 71b, 71c (Figure 1) branch off, where:
- line 71a conveys the air flow in output from cooler 7, or part thereof, to the mixing unit 503 which feeds the air+methane mixture to burners 2 of heating chamber 1 so as to recover most of the heat;
- line 71b directs the air flow in output from cooler 7, or part thereof, to the mixing unit 502 which feeds the air+methane mixture to manifold 12 so as to recover heat for the endogas production reaction;
- line 71c conveys the flow, or part thereof, to the exhaust towards the external environment.

Each valve 6in is controlled together with the corresponding valve 6out, creating an assembly for which, if a catalytic retort module 4-cooling tube 7 is fed with methane-air-CO₂ or methane-air mixture, the mixture produced is sent to the utility 21 - via the respective piping 21i - and if the same module is fed with N₂-CO₂ or N₂, the gases produced are sent to the exhaust in torch 22 via the respective pipeline 22i.

In this generator, according to the present invention, there is advantageously no direct contact between the flame (heating) that touches the internal chamber 3 and the gases that react inside the catalytic tubes 4, which are therefore heated by convection and radiation.

The combustion fumes, after having transferred their heat to internal chamber 3 and then to catalytic tubes 4, are generally discharged from the upper part of heating chamber 1 (Fig. 2).

It is understood that it is possible to provide the discharge of combustion fumes also in a different position of the plant without thereby departing from the object of the present invention.

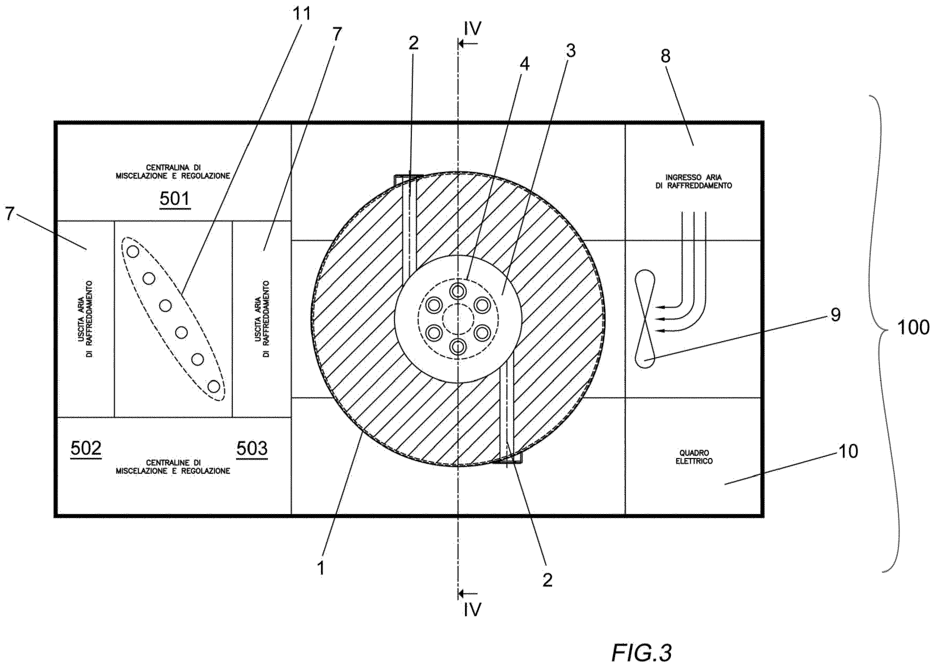

Burners 2 are generally arranged in an opposing manner with respect to said inner cylindrical chamber 3 so as to form one or more groups of burners 2, each group of said burners 2 providing a series of burners 2 vertically aligned one in relation to the other (Fig.1 and Fig.3). This arrangement allows the uniform heating of the whole external surface of said inner chamber 3 containing said retorts 4.

Each of said burners 2 can be fed separately and independently or said burners 2 can be fed in groups via one or more manifolds (combustion system and manifolds not illustrated in the drawings). In this way it is possible to modulate the heating according to the number of catalytic tubes 4 fed and therefore as a function of the total flow rate in operation.

It is understood that it is possible to provide for the use also of a single burner 2 without thereby departing from the scope of the present invention.

Said tubular catalytic reactors or retorts 4 each have an inner diameter smaller than 100.0 mm, comprised between 50.0 and 99.9 mm.

In the drawings said retorts 4 are shown in total as six in number, even if this is not binding for the purpose of the present invention.

Each catalytic tube 4 is partially filled with an appropriate quantity of a specific catalyst for endogas based on noble metal oxides.

This type of catalyst, more active with respect to nickel-based ones, allows a higher spatial speed (in terms of hourly gas/catalyst volume flow rate), generally greater than 4,000 h-1, preferably equal to or greater than 10,000 h-1, more preferably in the order of at least 15,000 h-1 (i.e. at least 15 Nm³/h of reformed gas per litre of catalyst). In this case the size is normally in balls of small diameter comprised between 2.5 and 5 mm, so as to have a high specific surface area and low pressure drops.

It is understood that it is possible to provide for the use of a spatial speed lower than 10,000 h-1 (that is lower than 10 Nm³/h of reformed gas per litre of catalyst) also with this type of catalyst based on noble metal oxides without thereby departing from the scope of the present invention.

It is also understood that it is possible to produce the present generator also using nickel-based catalysts, in place of those based on noble metal oxides, foregoing the dimensional advantages deriving from the greater catalytic activity of the latter, without thereby departing from the scope of the present invention.

Said catalytic tubes 4 are placed inside the inner chamber 3 in a substantially circular manner in the form of a tube bundle (Fig. 2 and Fig. 3) so that they can all be irradiated by the inner chamber 3 in a homogeneous manner one in relation to the other, during their simultaneous feeding.

In this way, the reaction between methane (or another hydrocarbon) and air can take place in a more homogeneous manner through the whole flow passage section in the catalytic tube 4 because the core temperature is more aligned with the temperature in proximity of the surface of the catalytic tube 4 seeing that the present tubes or retorts 4 have a smaller section with respect to known reactors.

It should be noted that in this system of tube bundle tubes, where the overall feed flow Q is the sum of the flows Qi in input to each feed tube 5, the reduction of the total flow rate by excluding one or more tubes 5 ensures that the optimum speed in each of the remaining catalytic tubes 4 remains unchanged.

In practice, the three-way valves 6in excluding singly one or more of said feed tubes 5 means that there is an overall flow Q in output from generator 100 which is lower than the nominal flow Qn for which the generator has been sized, said overall flow in operation Q being the sum of the flows Qi in each tube 4 which is in operation.

It is understood that it is possible to realise the system in such a way as to manage the feed tubes 5 and the relative catalytic tubes 4 managing them not individually, but for example in pairs or groups of three, so as to simplify the plant, reducing the number of valves 6in and 6out, without thereby departing from the scope of the present invention.

This plant 100 with six tubes or retorts 4 is therefore capable of producing endogas with constant optimal composition even at feed flow rates reduced by 90% with respect to the nominal flow rate, advantageously comprised within the range of 50-200 Nm³/h.

The realisation of a partial oxidation catalytic reactor through the use of a plurality of catalytic tubes 4 of small diameter, arranged in parallel one in relation to the other by way of a tube bundle, in a heating chamber 1, and individually selectable, also allows advantageously the excluding of one or more catalytic tubes 4 that should be found to be not performing in terms of composition of the gas produced, without significantly jeopardising the total flow rate generated (reduction of about 30% of the nominal flow rate normally acceptable also in known systems with one retort).

Also the exclusion of five of the six catalytic tubes 4 allows to obtain an optimal composition of the endogas with a flow rate reduced by 83% with respect to the nominal flow rate, a reduction normally not obtainable in the art with plants with one or two retorts.

It should be noted that the possibility of reducing the endogas flow rate significantly with respect to the nominal one allows both a saving in terms of operating costs and the regeneration of non-active modules during transients in which a flow rate lower than the nominal one Qn is demanded of the plant, at least 1/6, in the case of a six-module system. This allows the plant to be placed in optimal conditions when needed again, avoiding stops dedicated to catalyst regeneration.

A control of the operating conditions of each catalytic tube 4 can be carried out by controlling the feed pressure, whose value depends on the pressure drops of the system and consequently on the level of soiling (sooting) of the catalyst.

Furthermore, with the generator 100 having several reaction tubes 4 it is possible to replace only those reaction tubes that were to be found to be damaged, reducing maintenance costs.

In the same way, it is possible to replace the catalyst only in catalytic tubes or retorts 4 that are found to have a non-compliant composition, reducing maintenance costs. The present endogas generator 100 can be advantageously mounted on a skid and form a plug & play machine or plant that connects directly to the user's utilities (electricity, air, gas, etc.), without any specific technical assembly work, so as to be ready for use (turnkey).

The present generator 100 also provides an electrical panel 10 on board the machine for the electrical power supply of the electrical machines necessary for its operation (fan 9, valves 6in and 6out, Lambda probe, etc.).

Fan 9 is a high flow rate fan (e.g. > 5000 mc/h) which moves the air in duct 8 by cooling the gases produced as soon as they leave the catalyst located in the lower part of heating chamber 1.

Each burner 2 can be advantageously fed with air aspirated at the outlet of the duct of exchanger 7, where the temperature is higher, in order to achieve energy recovery as previously described in relation to the mixing unit 503 that feeds the air+methane mixture to burners 2 (Fig. 1).

Moreover, the feed air of the methane-air-CO₂ manifold, in fluid communication with valves 6in, therefore with feed tubes 5 and reaction tubes 4, can be advantageously aspirated from the duct of the exchanger 7, realising a further energy recovery, as already described previously in relation to the mixing control unit 502 that feeds the air+methane mixture to the catalytic reactor comprising catalytic tubes 4 (Fig. 2).

Since said generator is the result of a series of sub-modules (six in the case of what is shown in Figures 1-3 where there are six catalytic tubes 4 and six respective cooling modules composed of one or more tubes 11i), by varying the number, and adapting the heating and cooling part, it is possible to realise sizes in the range 50-200 Nm³/h of endogas produced by varying the number of catalytic tubes 4 and corresponding rows in the exchanger for cooling 7.

Given that each catalytic tube 4 is sized to advantageously produce 15 - 20 mc/h of endogas, the 100 mc/h plant provides 6 modules and a 200 mc/h plant provides 12 modules. Likewise, the number of cooling modules 11 of the exchanger 7 is directly linked to the number of catalytic tubes 4.

It should be noted that in known endogas generators, cooling is carried out advantageously with water and not with air. In the present system it is possible to use air, instead of water, in an efficient manner thanks to the oversizing of exchanger 7 and of the air aspiration duct 8.

Unlike the known solutions, the type of construction according to the present invention allows to cool the endogas produced immediately at the output from the heating chamber without the interposition of additional components that would limit the efficiency of the system in that the first section of tube would cool more slowly with respect to what takes place in the present invention.

In this specific embodiment described above with reference to the drawings, the endogas generator is a TOP-DOWN type system, i.e. with the feeding of the reaction mixture entering from the top of the catalytic reactor and the endogas exiting from the bottom of the catalytic reactor. It is understood, however, that this embodiment does not limit the object of the present invention and that it could be possible to use feeding of the reaction mixture from the bottom and an exit of the endogas from the top, without thereby departing from the scope of the present invention.

It should also be noted that the air-gas cooling in the present system has been illustrated in equicurrent even if, however, it could be carried out in countercurrent without departing from the scope of the present invention.

The endothermic mixture produced by the present generator 100 is used both as a protective atmosphere in heat and/or surface treatments of metals (with respect to oxidation), and as a mixture able to confer certain mechanical properties to the metal subjected to the treatment, for example in the surface carburization of steel parts intended for mechanical members that must combine fatigue resistance with surface hardness and wear resistance.

The present invention is not limited to the particular embodiments previously described and illustrated in the accompanying drawings, but numerous detailed changes may be made thereto, within the reach of the person skilled in the art, without thereby departing from the scope of the invention itself, as defined in the appended claims.

## Claims

1. Generator (100) of endogas for producing a flow (Q) of an endothermic gaseous mixture (endogas), optionally with high CO percentages greater than 20% by volume, starting from a gaseous reaction mixture comprising air + methane or another hydrocarbon, said endogas flow (Q) being used as feed of one or more furnaces for the heat treatment of metals or their alloys said generator (100) comprising
a catalytic reactor contained inside a heating chamber (1) and comprising at least three catalytic tubes (4) arranged in parallel one in relation to the other in the form of a tube bundle,
each of said catalytic tubes (4) having an inner diameter smaller than 100 mm and containing, in a section of tube, a catalyst based on noble metal oxides for the partial oxidation of said mixture of air-methane or any other hydrocarbon each catalytic tube (4) being in fluid communication with a respective feed tube (5), external to said heated chamber (1), to feed said catalytic tube (4) with a respective flow (Qi)
each of said feed tubes (5) being provided with respective selectable regulating means (6in) apt to exclude, if required, the respective feed flow (Qi) to said catalytic tube (4), so as to obtain an overall flow (Q) of endogas, exiting from the catalytic reactor that is smaller with respect to a prefixed nominal overall flow rate (Qn) of endogas,
said generator (100) further comprising
- at least one gas/air exchanger (7) for cooling the endogas exiting from said heating chamber (1),
said exchanger (7) comprising one or more cooling tubes (11i) in fluid communication with said catalytic tubes (4),
said generator (100) being **characterised in that** it further comprises an automated system (200) comprising mixing and control units (501; 502), independent one from the other, apt to feed and control, by means of said selectable regulating means (6in), independent one from the other, one or more of said catalytic tubes (4) with
- one or more reaction flows (12i) composed of air + methane, added with CO₂ supplied by said unit (502);
and
- one or more catalyst regeneration flows (13i) of the catalytic tubes (4) not fed with said reaction flows (12i), composed of a mixture of CO₂ + N₂ but also only N₂ for washing/flushing during the normal operation of the generator, supplied by said unit (501),
in such a way that said generator (100) can be modulated simultaneously both in respect of the flow rate produced of endogas, and optionally also in the CO content in the endogas produced, and in the number of catalytic tubes (4) to be regenerated.

2. Generator (100) according to claim 1, wherein said cylindrical heating chamber (1) internally comprises a plurality of burners (2) for heating directly with flame an inner chamber (3) containing said catalytic tubes (4).

3. Generator (100) according to claim 1 or 2, wherein the one or more reaction flows (12i) of air+methane mixture, added with CO₂, branch off from a manifold (12) and converge, each one, in the respective selectable regulation means (6in) placed upstream of the corresponding feed tube (5).

4. Generator (100) according to any one of the preceding claims, wherein the one or more regeneration flows (13i) of N₂, optionally added with CO₂, branch off from a manifold (13) and converge, each one, in the respective selectable regulation means (6in) placed upstream of the corresponding feed tube (5).

5. Generator (100) according to any one of the preceding claims, in the form of a plug & play machine or system, mounted on a skid and apt to be connected directly to the user's utilities.

6. Generator (100) according to any one of the preceding claims, wherein said selectable regulating means (6in) are in the form of automatic three-way valves and are alternatively actuated by said mixing and control unit (501) or by said mixing and control unit (502).

7. Generator (100) according to any one of the preceding claims, wherein said mixing/regulation system (200) further comprises a third mixing and regulation unit (503) of a binary mixture of air + methane for the combustion of burners housed in the heating chamber (1) for heating said catalytic tubes (4).

8. Generator (100) according to claim 1, wherein said gas/air exchanger (7) is constituted by at least one first duct inside whereof a plurality of cooling tubes (11i) are placed, in parallel one to the other, in a number equal to the number of said catalytic tubes (4), said cooling tubes 11i) being preferably finned.

9. Generator (100) according to any one of the preceding claims, further comprising at least one duct (8) for the input of air for the cooling of said endogas, said duct (8) being in fluid communication with one or more of said gas/air heat exchangers (7).

10. Generator (100) according to any one of the preceding claims further comprising means (9) for the movement of the cooling air, preferably in the form of a fan.

11. Generator (100) according to any one of the preceding claims, wherein the catalyst used is based on rhenium and/or a noble metal selected from among platinum, rhodium, iridium, ruthenium and palladium, supported on alumina.

12. Method for the production of a flow (Q) of an endothermic gaseous mixture (endogas) using the generator according to one of the preceding claims, **characterised in that** one or more of said catalytic tubes are fed, independently of each other, with:
- a flow of an air/methane mixture, optionally added with CO₂, for the production of said endogas, or
- a flow of a CO₂/N₂ mixture or N₂, for the regeneration or the washing respectively of said catalytic tubes,
so as to allow the continuing of the production of endogas with one or more catalytic tubes of said generator, also during the phases of regeneration or of washing of the remaining catalytic tubes not involved in the production of endogas.

13. Method according to claim 12, **characterised in that** the following steps are provided:
- activation of the function of regeneration or of washing of the catalyst;
- verification of the number of retorts not used for the production of endogas, regardless of the percentage of CO set;
- activation of one or more CO₂ delivery valves as a function of the number of retorts not used;
- delivery of CO₂ in dilution to washing N₂ to retorts not used for the production of endogas;
- repetition of the calculation and regulation cycle (feedback regulation).

14. Method according to claim 12, **characterised in that**, in association with the endothermic reaction of partial oxidation of the methane, the dry reforming reaction of the methane is carried out at the same partial oxidation temperatures.

## Patentansprüche

1. Generator (100) von Endogas zur Herstellung eines Stroms (Q) einer endothermen gasförmigen Mischung (Endogas), wahlweise mit hohen CO-Prozentsätzen von mehr als 20 Volumen-%, ausgehend von einer gasförmigen Reaktionsmischung umfassend Luft + Methan oder einem anderen Kohlenwasserstoff, wobei der Endogasstrom (Q) als Beschickung eines oder mehrerer Öfen für die Wärmebehandlung von Metallen oder ihren Legierungen verwendet wird,
wobei der Generator (100) Folgendes umfasst
einen katalytischen Reaktor, der innerhalb einer Erhitzungskammer (1) enthalten ist und mindestens drei Katalyseröhren (4) umfasst, die parallel zueinander in Form eines Rohrbündels angeordnet sind,
wobei jede der Katalyseröhren (4) einen Innendurchmesser aufweist, der kleiner als 100 mm ist und in einem Röhrenabschnitt einen Katalysator, der auf Edelmetalloxiden basiert, für die teilweise Oxidation der Mischung von Luft-Methan oder irgendeinem anderen Kohlenwasserstoff enthält,
wobei jede Katalyseröhre (4) in Fluidkommunikation mit einer entsprechenden Beschickungsröhre (5) außerhalb der erhitzten Kammer (1) zum Beschicken der Katalyseröhre (4) mit einem entsprechenden Strom (Qi) steht,
wobei jede der Beschickungsröhren (5) mit entsprechenden wählbaren Reguliermitteln (6in) ausgestattet ist, die geeignet sind, nötigenfalls den entsprechenden Beschickungsstrom (Qi) zu der Katalyseröhre (4) auszuschließen, um so einen Gesamtstrom (Q) von Endogas, der aus dem katalytischen Reaktor austritt und kleiner mit Bezug auf eine vorher festgelegte nominelle Gesamtströmungsrate (Qn) von Endogas ist, zu erhalten,
wobei der Generator (100) ferner Folgendes umfasst
- mindestens einen Gas-/Luftaustauscher (7) zum Kühlen des Endogases, das aus der Erhitzungskammer (1) austritt,
wobei der Austauscher (7) eine oder mehrere Kühlröhren (11i) in Fluidkommunikation mit den Katalyseröhren (4) umfasst,
wobei der Generator (100) **dadurch gekennzeichnet ist, dass** er ferner Folgendes umfasst ein automatisiertes System (200) umfassend Misch- und Steuereinheiten (501; 502), die unabhängig voneinander geeignet sind, durch das auswählbare Reguliermittel (6in) unabhängig voneinander eine oder mehrere der Katalyseröhren (4) mit
- einem oder mehreren Reaktionsströmen (12i) zu beschicken und zu steuern, die aus Luft + Methan bestehen, denen durch die Einheit (502) geliefertes CO₂ zugegeben wird;
und
- einem oder mehrere Katalysatorregenerierungsströmen (13i) der Katalyseröhren (4), die nicht mit den Reaktionsströmen (12i) beschickt werden, die aus einer Mischung von CO₂ und N₂ jedoch auch nur N₂ zum Waschen/Spülen während des normalen Betriebs des Generators, durch die Einheit (501) geliefert, bestehen,
derart, dass der Generator (100) gleichzeitig sowohl mit Bezug auf die durch Endogas erzeugte Strömungsrate als auch wahlweise des CO-Gehalts in dem erzeugten Endogas und der Anzahl von zu regenerierenden Katalyseröhren (4) moduliert werden kann.

2. Generator (100) nach Anspruch 1, wobei die zylindrische Erhitzungskammer (1) intern eine Mehrzahl von Brennern (2) zum direkten Erhitzen mit einer Flamme einer inneren Kammer (3) die die Katalyseröhren (4) enthält, umfasst.

3. Generator (100) nach Anspruch 1 oder 2, wobei der eine oder die mehreren Reaktionsströme (12i) von Luft+Methan-Mischung mit zugegeben CO₂ von einem Sammelrohr (12) abzweigt/abzweigen und, jeder in dem jeweiligen auswählbaren Reguliermittel (6in) stromaufwärts von der jeweiligen Beschickungsröhre (5) positioniert, zusammenlaufen.

4. Generator (100) nach einem der vorhergehenden Ansprüche, wobei ein oder mehrere Regenerationsströme (13i) von N₂, wahlweise mit zugegebenem CO₂, von einem Sammelrohr (13) abzweigt/abzweigen und, jeder in dem jeweiligen auswählbaren Reguliermittel (6in) stromaufwärts von der jeweiligen Beschickungsröhre (5) positioniert, zusammenlaufen.

5. Generator (100) nach einem der vorhergehenden Ansprüche in Form einer/eines Plug- and Play-Maschine oder Systems, die/das auf einem Schlitten montiert und geeignet ist, direkt an Versorger des Benutzers angeschlossen zu werden.

6. Generator (100) nach einem der vorhergehenden Ansprüche, wobei die Reguliermittel (6in) in Form automatischer Dreiwegventile vorliegen und wahlweise durch die Misch- und Steuereinheit (501) oder durch die Misch- und Steuereinheit (502) betätigt werden.

7. Generator (100) nach einem der vorhergehenden Ansprüche, wobei das Misch-/Reguliersystem (200) ferner eine dritte Misch- und Reguliereinheit (503) einer binären Mischung von Luft + Methan für die Verfeuerung durch Brenner, die in der Erhitzungskammer (1) untergebracht sind, zum Erhitzen der Katalyseröhren (4) umfasst.

8. Generator (100) nach Anspruch 1, wobei der Gas-/Luftaustauscher (7) durch mindestens eine erste Führung gebildet ist, innerhalb derer eine Mehrzahl von Kühlröhren (11i) parallel zueinander in einer Anzahl positioniert sind, die gleich der Anzahl der Katalyseröhren (4) ist, wobei die Kühlröhren (11i) bevorzugt gerippt sind.

9. Generator (100) nach einem der vorhergehenden Ansprüche, ferner mindestens eine Führung (8) zum Eingeben von Luft zum Kühlen des Endogases umfassend, wobei die Führung (8) in Fluidkommunikation mit einem oder mehreren der Gas-/Luftwärmeaustauscher (7) steht.

10. Generator (100) nach einem der vorhergehenden Ansprüche, ferner Mittel (9) zum Bewegen der Kühlluft, bevorzugt in Form eines Ventilators, umfassend.

11. Generator (100) nach einem der vorhergehenden Ansprüche, wobei der verwendete Katalysator auf Rhenium und/oder einem Edelmetall basiert, ausgewählt unter Platin, Rhodium, Iridium, Ruthenium und Palladium, auf Aluminiumoxid geträgert.

12. Verfahren für die Herstellung eines Stroms (Q) einer endothermen gasförmigen Mischung (Endogas) mithilfe des Generators nach einem der vorhergehenden Ansprüche, **dadurch gekennzeichnet, dass** ein oder mehrere der Katalyseröhren unabhängig voneinander beschickt werden mit:
- einem Strom einer Luft-/Methanmischung, wahlweise mit zugegebenem CO₂, für die Herstellung des Endogases oder
- einem Strom einer CO₂/N₂-Mischung oder von N₂ zum Regenerieren oder Waschen jeweils der Katalyseröhren,
um das Fortsetzen der Herstellung von Endogas mit einer oder mehreren Katalyseröhren des Generators, auch während der Phasen des Regenerierens oder des Waschens der übrigen Katalyseröhren, die nicht in der Produktion von Endogas involviert sind, zu gestatten.

13. Verfahren nach Anspruch 12, **dadurch gekennzeichnet, dass** die folgenden Schritte bereitgestellt werden:
- Aktivierung der Funktion der Regenerierung oder des Waschens des Katalysators;
- Nachprüfen der Anzahl von für die Herstellung von Endogas nicht benutzten Retorten, ungeachtet des Prozentsatzes von festgelegtem CO;
- Aktivierung eines oder mehrerer CO₂-Abgabeventile in Abhängigkeit von der Anzahl von nicht verwendeten Retorten;
- Abgabe von CO₂ in Verdünnung zum Waschen von N₂ zu bei der Herstellung von Endogas nicht benutzten Retorten;
- Wiederholung des Berechnungs- und Regulierungszyklus (Rückmelderegulierung).

14. Verfahren nach Anspruch 12, **dadurch gekennzeichnet, dass** in Verbindung mit der endothermen Teiloxidationsreaktion des Methans die Trockenreformierreaktion des Methans bei derselben Teiloxidationstemperatur ausgeführt wird.

## Revendications

1. Générateur (100) d'endogaz destiné à la production d'un écoulement (Q) d'un mélange gazeux endothermique (endogaz), éventuellement avec des pourcentages de CO élevés supérieurs à 20 % en volume, à partir d'un mélange réactionnel gazeux comprenant de l'air et du méthane ou un autre hydrocarbure, ledit écoulement d'endogaz (Q) étant utilisé comme alimentation d'un ou de plusieurs fours pour le traitement thermique de métaux ou de leurs alliages
ledit générateur (100) comprenant
un réacteur catalytique contenu à l'intérieur d'une chambre de chauffage (1) et comprenant au moins trois tubes catalytiques (4) agencés en parallèle les uns par rapport aux autres sous la forme d'un faisceau de tubes,
chacun desdits tubes catalytiques (4) comportant un diamètre interne inférieure à 100 mm et contenant, dans une section de tubes, un catalyseur basé sur des oxydes de métaux nobles pour l'oxydation partielle dudit mélange d'air et de méthane ou de tout autre hydrocarbure
chaque tube catalytique (4) étant en communication fluidique avec un tube d'alimentation respectif (5), externe à ladite chambre chauffée (1), pour alimenter ledit tube catalytique (4) avec un écoulement respectif (Qi)
chacun desdits tubes d'alimentation (5) étant pourvu de moyens de régulation sélectionnables respectifs (6in) aptes à exclure, si nécessaire, l'écoulement d'alimentation respectif (Qi) vers ledit tube catalytique (4), de manière à obtenir un écoulement global (Q) d'endogaz, sortant du réacteur catalytique qui est inférieur par rapport à un taux d'écoulement global nominal préfixé (Qn) d'endogaz,
ledit générateur (100) comprenant en outre
- au moins un échangeur gaz/air (7) destiné au refroidissement de l'endogaz sortant de ladite chambre de chauffage (1),
ledit échangeur (7) comprenant un ou plusieurs tubes de refroidissement (11i) en communication fluidique avec lesdits tubes catalytiques (4),
ledit générateur (100) **caractérisé en ce qu'**il comprend en outre
un système automatisé (200) comprenant des unités de mélange et de commande (501 ; 502), indépendantes l'une de l'autre, aptes à alimenter et à commander, au moyen desdits moyens de régulation sélectionnables (6in), indépendamment les uns des autres, un ou plusieurs desdits tubes catalytiques (4) avec
- un ou plusieurs écoulements de réaction (12i) composés d'air et de méthane, ajouté avec du CO₂ fourni par ladite unité (502) ; et
- un ou plusieurs écoulements de régénération de catalyseur (13i) des tubes catalytiques (4) non alimentés avec lesdits écoulements de réaction (12i), composés d'un mélange de CO₂ et de N₂ mais également uniquement de N₂ pour le lavage/le rinçage pendant le fonctionnement normal du générateur, fournie par ladite unité (501),
- d'une manière telle que ledit générateur (100) peut être modulé de manière simultanée à la fois par rapport au taux d'écoulement produit d'endogaz, et éventuellement également par rapport à la teneur en CO dans l'endogaz produit, et par rapport au nombre de tubes catalytiques (4) devant être régénérés.

2. Générateur (100) selon la revendication 1, dans lequel ladite chambre de chauffage cylindrique (1) comprend de manière interne une pluralité de brûleurs (2) permettant de chauffer directement avec une flamme une chambre interne (3) contenant lesdits tubes catalytiques (4).

3. Générateur (100) selon la revendication 1 ou la revendication 2, dans lequel l'un ou plusieurs écoulements de réaction (12i) du mélange d'air et de méthane, ajouté avec du CO₂, bifurquent à partir d'un collecteur (12) et convergent, chacun, dans les moyens de régulation sélectionnables respectifs (6in) positionnés en amont du tube d'alimentation correspondant (5).

4. Générateur (100) selon l'une quelconque des revendications précédentes, dans lequel l'un ou plusieurs écoulements de régénération (13i) de N₂, éventuellement ajouté avec du CO₂, bifurquent à partir d'un collecteur (13) et convergent, chacun, dans les moyens de régulation sélectionnables respectifs (6in) positionnés en amont du tube d'alimentation correspondant (5).

5. Générateur (100) selon l'une quelconque des revendications précédentes, sous la forme d'une machine ou d'un système plug and play, monté(e) sur un patin et apte à être connecté(e) directement aux services publics de l'utilisateur.

6. Générateur (100) selon l'une quelconque des revendications précédentes, dans lequel lesdits moyens de régulation sélectionnable (6in) se présentent sous la forme de vannes automatiques à trois voies et sont alternativement actionnées au moyen de ladite unité de mélange et de commande (501) ou au moyen de ladite unité de mélange et de commande (502).

7. Générateur (100) selon l'une quelconque des revendications précédentes, dans lequel ledit système de mélange/régulation (200) comprend en outre une troisième unité de mélange et de régulation (503) d'un mélange binaire d'air et de méthane pour la combustion de brûleurs placés dans la chambre de chauffage (1) pour le chauffage desdits tube catalytiques (4).

8. Générateur (100) selon la revendication 1, dans lequel ledit échangeur gaz/air (7) est constitué d'au moins un premier conduit à l'intérieur duquel une pluralité de tubes de refroidissement (11i) sont positionnés, en parallèle l'un par rapport à l'autre, dans un nombre égal au nombre desdits tubes catalytiques (4), lesdits tubes de refroidissement (11i) étant de préférence à ailettes.

9. Générateur (100) selon l'une quelconque des revendications précédentes, comprenant en outre au moins un conduit (8) pour l'entrée d'air pour le refroidissement dudit endogaz, ledit conduit (8) étant en communication fluidique avec un ou plusieurs desdits échangeurs de chaleur à gaz/air (7).

10. Générateur (100) selon l'une quelconque des revendications précédentes, comprenant en outre des moyens (9) pour le mouvement de l'air de refroidissement, de préférence sous la forme d'un ventilateur.

11. Générateur (100) selon l'une quelconque des revendications précédentes, dans lequel le catalyseur utilisé est à base de rhénium et/ou d'un métal noble choisi parmi le platine, le rhodium, l'iridium, le ruthénium et le palladium, supporté sur de l'alumine.

12. Procédé de production d'un écoulement (Q) d'un mélange gazeux endothermique (endogaz) en utilisant le générateur selon l'une quelconque des revendications précédentes, **caractérisé en ce qu'**un ou plusieurs desdits tubes catalytiques sont alimentés, indépendamment l'un de l'autre, avec :
- un écoulement d'un mélange d'air et de méthane, éventuellement ajouté avec du CO₂, pour la production dudit endogaz, ou
- un écoulement d'un mélange de CO₂ et de N₂ ou de N₂, pour la régénération ou le lavage respectivement desdits tubes catalytiques,
de manière à permettre la poursuite de la production d'endogaz avec un ou plusieurs tubes catalytiques dudit générateur, également durant les phases de régénération ou de lavage des tubes catalytiques restants non impliqués dans la production d'endogaz.

13. Procédé selon la revendication 12, **caractérisé en ce que** les étapes suivantes sont prévues :
- activation de la fonction de régénération ou de lavage du catalyseur ;
- vérification du nombre de retorts non utilisés pour la production d'endogaz, quel que soit le pourcentage de CO fixé ;
- activation d'une ou de plusieurs vannes de distribution de CO₂ comme fonction du nombre de retorts non utilisés ;
- livraison de CO₂ en dilution pour le lavage de N2 à des rotors non utilisés pour la fonction d'endogaz ;
- répétition du cycle de calcul et de régulation (règlement de la rétroaction).

14. Procédé selon la revendication 12, **caractérisé en ce que**, en association avec la réaction endothermique d'oxydation partielle du méthane, la réaction de formation à sec du méthane est effectuée aux mêmes températures d'oxydation partielle.
